# FASCICULE DE BREVET EUROPEEN

(11) **EP 4 486 652 B1**
(45) Date de publication et mention de la délivrance du brevet: **14.01.2026**
(21) Numéro de dépôt: 23711773.4
(22) Date de dépôt: 24.02.2023
(51) Int. Cl.: B64U 10/10, B64U 30/24, B64U 30/293, B64U 70/50, F41B 11/80, F41F 7/00

(54) **DISPOSITIF DE LANCEMENT PNEUMATIQUE D'UN DRONE**
VORRICHTUNG ZUM PNEUMATISCHEN STARTEN EINER DROHNE
DEVICE FOR PNEUMATIC LAUNCHING OF A DRONE

(30) Priorité: 01.03.2022 FR 2201677
(43) Date de publication de la demande: 08.01.2025
(73) Titulaire: KNDS France, 78034 Versailles Cedex (FR)
(72) Inventeur: GAUTIER, Pierre, 18023 BOURGES (FR)
(74) Mandataire: Cabinet Chaillot
(86) Numéro de dépôt international: PCT/IB2023/051711
(87) Numéro de publication internationale: WO 2023/166389

(56) Documents cités:
- WO-A1-2013/011412
- WO-A1-2015/127178
- WO-A2-2014/035518
- US-A- 3 040 628

## Description

Le domaine technique de l'invention est celui des dispositifs de lancement pneumatiques, et plus spécifiquement, celui des dispositifs de lancement pneumatiques pour drones.

Les drones permettent d'emporter une charge utile destinée à des missions à vocation civile ou militaire, de surveillance, de renseignement, de combat ou de transport. Engins volant de taille réduite, moins chers et plus simples à mettre en œuvre qu'un aéronef embarquant un pilote, les drones connaissent un essor important.

Plusieurs moyens de lancement de drone sont connus, parmi lesquels les dispositifs de lancement pneumatiques.

Un dispositif de lancement pneumatique est un dispositif qui utilise de l'air comprimé, ou tout autre type de gaz sous pression, pour provoquer le lancement du drone.

De manière classique, un dispositif de lancement pneumatique comprend une chambre de pressurisation qui est mise sous pression par un gaz comprimé. La libération de la pression contenue dans la chambre génère de l'énergie, laquelle énergie permet de propulser le drone.

Il existe de nombreux types de dispositifs de lancement pneumatiques. En particulier, la pression peut être libérée par divers moyens.

Un type de dispositif de lancement pneumatique connu est un lanceur de drone à catapulte pneumatique, tel que celui divulgué, par exemple, dans la demande de brevet français FR2297770 A1. Le principe de fonctionnement de cette catapulte pneumatique est la détente d'un gaz sous pression dans un assemblage télescopique de deux tubes cylindriques et concentriques de manière à provoquer le déplacement rectiligne de l'un par rapport à l'autre.

Un autre type de dispositif de lancement pneumatique connu est un dispositif à tube de lancement, tels que ceux divulgués dans le brevet américain US7584925 B2 et dans les demandes internationales de brevet WO2015/127178, WO2013/011412 et WO2014/035518.

Le but de ces dispositifs à tube de lancement est de propulser le drone à quelque mètres au-dessus du véhicule portant le tube de lancement pour le déploiement de ce drone, dans le but d'éviter tout contact du drone avec les antennes montées sur le véhicule et de déployer rapidement le drone.

Dans le dispositif de lancement selon le brevet US7584925 B2, lors du lancement un gaz de lancement contenu dans un réservoir de gaz de lancement est libéré dans un tube de lancement après l'ouverture d'un système de vannes, une première partie de ce gaz de lancement force un piston coulissant libre monté à l'intérieur du tube de lancement à se déplacer vers l'extrémité avant ouverte du tube de lancement, et une seconde partie du gaz de lancement sort du tube de lancement par son extrémité avant ouverte.

Dans le dispositif de lancement selon la demande de brevet WO2015/127178, lors du lancement un gaz comprimé contenu dans une chambre est libéré dans un tube de lancement contenant le drone après l'ouverture d'une vanne de décharge.

Dans le dispositif de lancement selon la demande de brevet WO2014/035518, lors du lancement, un gaz généré par un générateur de gaz disposé à l'intérieur d'un tube de lancement est introduit dans un volume à haute pression définit entre une jupe d'un sabot et une enveloppe contenant le générateur de gaz, la jupe étant couplée de manière détachable à l'enveloppe par l'intermédiaire d'un couplage adhésif. La pression de gaz résultante exerce une pression contre la jupe jusqu'à la rupture du couplage adhésif, une fois une certaine pression de rupture atteinte dans le volume à haute pression. Puis, le gaz qui continue d'être généré pousse la jupe libérée contre la paroi du tube de lancement afin d'entraîner le sabot le long du tube de lancement jusqu'à ce que le drone soit éjecté hors du tube de lancement.Les dispositifs à tube de lancement décrits ci-dessus présentent comme inconvénient de ne pas permettre un contrôle suffisant de la valeur de la pression de gaz par laquelle le drone est éjecté, et donc de ne pas permettre une maîtrise de la vitesse et de la hauteur de l'éjection du drone, de sorte qu'il est nécessaire de prévoir une marge de sécurité avant le déploiement du drone afin d'éviter qu'il n'entre en contact avec, par exemple, les antennes du véhicule.

La présente invention vise ainsi à proposer un dispositif de lancement pneumatique permettant de maîtriser la pression de lancement par laquelle le drone est éjecté, capable ainsi d'éjecter un drone de manière fiable et reproductible et grâce auquel un déploiement effectivement rapide du drone peut être mis en œuvre.

La solution selon la présente invention repose sur l'utilisation de moyens permettant d'appliquer instantanément au drone la pression par laquelle on souhaite que le drone soit éjecté, et non une libération progressive, voire partielle, d'une pression de gaz derrière le drone comme dans les dispositifs de l'état antérieur de la technique.

La demande de brevet WO2013/011412 décrit un dispositif selon le préambule de la revendication 1.

La présente invention a donc pour objet un dispositif de lancement pneumatique d'un drone, dispositif comprenant :
- un tube de lancement longitudinal ayant une première extrémité, arrière, qui est fermée et une seconde extrémité, avant, qui est ouverte, et dont l'intérieur définit une chambre de lancement destinée à recevoir un drone et dans laquelle se situe un siège contre lequel le drone est positionné avant son lancement ;
- une chambre de pressurisation située à l'extrémité arrière du tube de lancement et apte à être mise sous pression par une source de pression, la chambre de pressurisation ayant une première extrémité, avant, dans laquelle est prévue une ouverture de passage débouchant dans la chambre de lancement et, en utilisation, derrière le drone placé contre le siège ; et
- des moyens d'obturation temporaire de l'ouverture de passage aptes à passer de manière instantanée d'une configuration fermée, dans laquelle l'ouverture de passage est obturée de manière étanche, à une configuration ouverte dans laquelle l'ouverture de passage est complètement ouverte,

les moyens d'obturation temporaire étant agencés pour passer de la configuration fermée à la configuration ouverte de manière instantanée sous l'action de la pression de gaz à l'intérieur de la chambre de pressurisation, après que celle-ci a atteint une pression prédéterminée, dite de déclenchement, et par le fait que la section transversale de l'ouverture de passage est suffisamment grande pour qu'instantanément au passage des moyens d'obturation temporaire de la configuration fermée à la configuration ouverte, la pression de gaz régnant dans la chambre de pressurisation et l'espace se trouvant derrière le drone, alors en communication l'un avec l'autre, soit la pression de lancement souhaitée pour le drone,

caractérisé par le fait que le dispositif comprend ladite source de pression, laquelle est formée par une source de gaz interne disposée à l'intérieur de la chambre de pressurisation, ladite source de pression comprend, placés dans la chambre de pressurisation, un diffuseur, délimitant un réservoir d'un premier réactif, et un second réactif, les premier et second réactifs, lorsque mis en présence l'un de l'autre, réagissant en générant un gaz de mise sous pression de la chambre de pressurisation, une électrovanne étant disposée de façon à permettre de manière sélective la mise en communication fluidique du réservoir et de la chambre de pressurisation.

L'expression « complètement ouverte » signifie que les moyens d'obturation temporaire sont dégagés de l'ouverture de passage.

Avantageusement, la section transversale de l'ouverture de passage représente entre 30 % et 50 % de la section transversale de la chambre de lancement.

Il est possible de prévoir que les moyens d'obturation temporaire soient agencés pour passer de la configuration fermée à la configuration ouverte par actionnement d'un moyen de libération actionnable mécaniquement. Par exemple, les moyens d'obturation temporaire peuvent ainsi comprendre un volet monté librement pivotant en sortie de l'ouverture de passage, ou deux volets montés librement pivotants autour d'axes disposés de part et d'autre de l'ouverture de passage, et maintenu dans une position de fermeture par un verrou mécanique déplaçable entre une position de verrouillage du volet dans la position de fermeture, et une position de libération dans laquelle il est dégagé du volet qui est alors amené instantanément à pivoter et ouvrir l'ouverture de passage par la pression de gaz. Le déplacement du verrou peut être commandé par tout moyen approprié, comme par exemple par électroaimant. De cette manière, l'instruction de lancement du drone est mise en œuvre par la commande du verrou.

Selon un mode de réalisation préféré, les moyens d'obturation temporaire sont agencés pour passer de la configuration fermée à la configuration ouverte de manière automatique dès que la pression de gaz à l'intérieur de la chambre de pressurisation atteint la pression de déclenchement.

Les moyens d'obturation temporaire pourront alors avantageusement comprendre un ensemble disque de rupture qui est disposé à l'ouverture de passage et comprend une membrane tarée s'étendant en travers de l'ouverture de passage de façon à l'obturer, la membrane étant dimensionnée pour se rompre à la pression de déclenchement.

La membrane tarée peut par exemple être réalisée en acier inoxydable, en matière plastique ou en graphite. Bien entendu, elle pourra être réalisée en tout autre matériau approprié.

La membrane tarée peut être conçue pour se rompre tout autour de sa périphérie, au niveau de laquelle est rendue solidaire de la chambre de pressurisation, ou pour se rompre à partir de son centre, ou suivant tout autre mode de rupture permettant à l'ouverture de passage d'être complètement ouverte.

L'ensemble disque de rupture peut être fixé de manière amovible à la chambre de pressurisation. De préférence, l'ensemble disque de rupture comprend une bague de support et une bague de fixation de mêmes dimensions et fixées l'une à l'autre par des organes de fixation traversant des trous prévus à cet effet dans les bagues, avec la périphérie de la membrane tarée prise en sandwich entre les bagues, l'ensemble disque de rupture étant fixé de manière amovible à l'extrémité avant de la chambre de pressurisation également par lesdits organes de fixation.

Un tel ensemble disque de rupture présente l'avantage d'avoir à la fois un faible coût et une rapidité d'ouverture. Lors de la maintenance et du reconditionnement d'un nouveau drone, il suffit simplement de changer la membrane rompue par une nouvelle membrane, ce qui est plus économique que de remplacer, par exemple, un initiateur pyrotechnique et une charge génératrice de gaz.

L'extrémité arrière du tube de lancement peut être formée par un culot fixé de manière amovible à un épaulement intérieur du tube de lancement, culot à partir duquel s'étend une partie tubulaire dont l'axe longitudinal est coaxial à l'axe longitudinal du tube de lancement et qui définit, avec le culot, la chambre de pressurisation, un joint d'étanchéité étant interposé entre la partie tubulaire et le bord annulaire intérieur de l'épaulement intérieur. Le dispositif est alors de structure simple à réaliser et à assembler.

L'extrémité avant du tube de lancement peut être fermée par un bouchon étanche.

De préférence le premier réactif est du peroxyde d'hydrogène (H₂O₂) sous pression et le second réactif est un catalyseur solide à base de permanganate de potassium (KmnO₄ ).

Le dispositif selon la présente invention peut comprendre en outre un sabot de lancement apte à être reçu dans la chambre de lancement et mis en contact contre le siège, le sabot de lancement étant configuré pour contenir et entourer le drone avant le lancement et pendant son déplacement le long du tube de lancement lors de l'éjection. Le sabot permet la protection et le guidage du drone dans le tube de lancement lors de la phase de lancement, et il permet aussi de guider, pressuriser et répartir l'énergie développée par la pression de gaz.

Il convient donc de préciser ici que selon la présente invention le drone peut être en contact direct contre le siège du tube de lancement, ou en contact indirect avec celui-ci, par l'intermédiaire du sabot.

Avantageusement, le sabot de lancement est formé de plusieurs segments séparables, de préférence quatre segments.

Pour mieux illustrer l'objet de la présente invention, on va en décrire ci-après un mode de réalisation particulier, avec référence aux dessins annexés. Sur ces dessins :
[Fig.1] est une vue de côté, en coupe longitudinale, du dispositif de lancement pneumatique selon un mode de réalisation particulier ne faisant pas partie de l'invention revendiquée, avec une source de pression selon un premier mode de réalisation ;
[Fig.2] est une vue de côté, suivant un premier plan de coupe longitudinale, partielle, du dispositif de lancement pneumatique de la [Fig.1], avec une source de pression selon la présente invention ;
[Fig.3] est une vue en coupe longitudinale de la source de pression selon la présente invention, suivant un plan de coupe perpendiculaire audit premier plan de coupe ;
[Fig.4] est une vue en perspective éclatée du dispositif de la [Fig.1], le sabot et le drone étant omis ;
[Fig.5] est une vue en perspective éclatée du sabot et du drone, dans leur configuration avant le lancement ; et
[Fig.6] est une vue en perspective du sabot et du drone, dans leur configuration après le lancement.

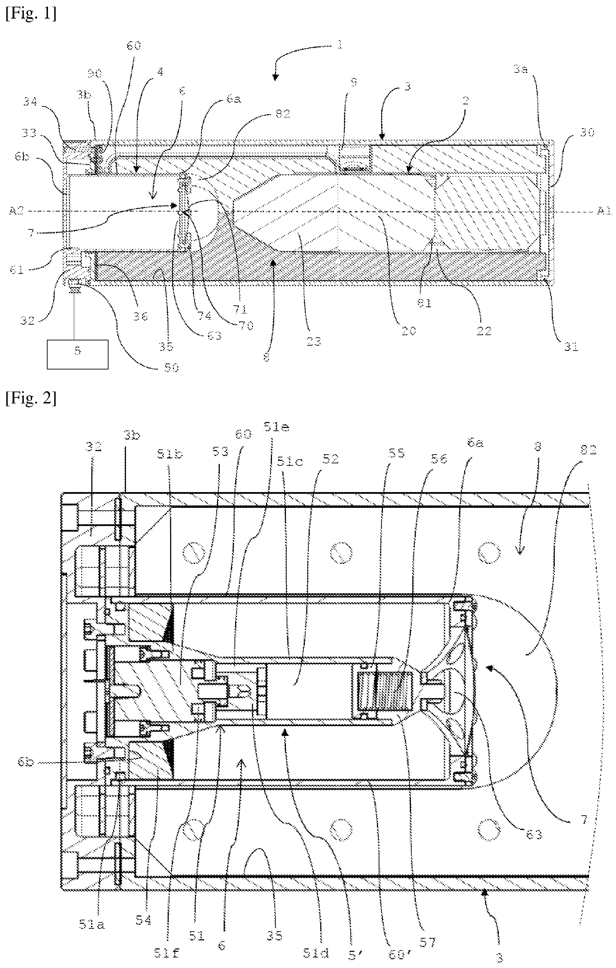

Si l'on se réfère tout d'abord aux Figures 1, 5 et 6, on peut voir que le dispositif 1 de lancement pneumatique selon la présente invention est destiné au lancement d'un objet de type drone 2.

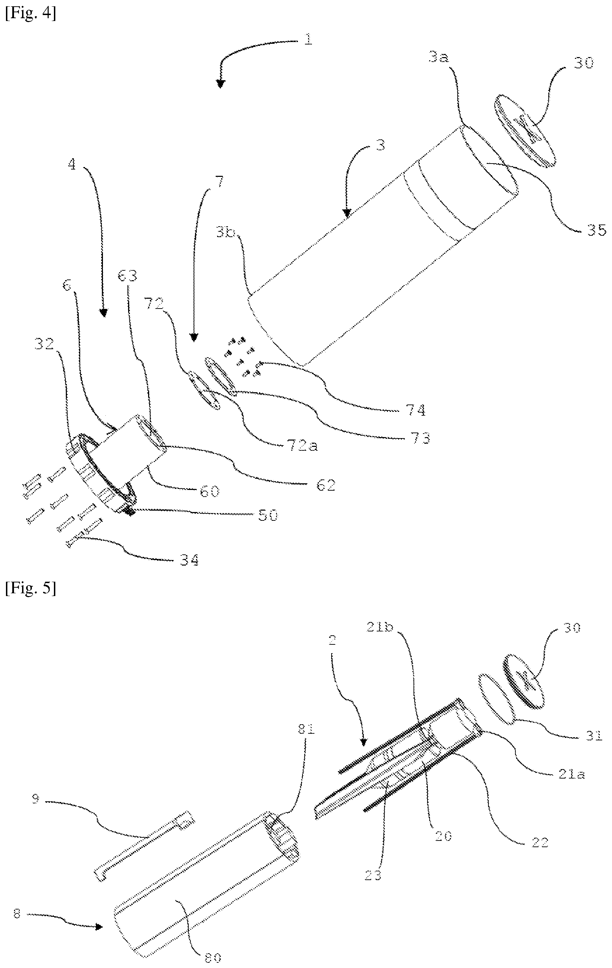

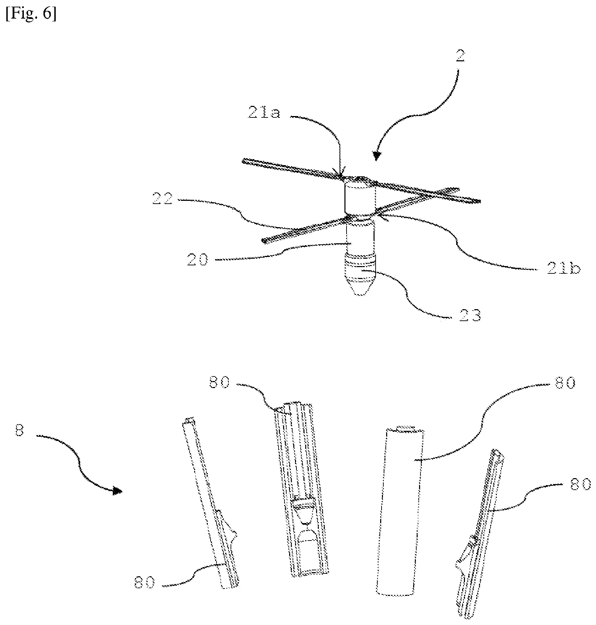

Un tel drone 2 comprend, de manière classique, un corps de base 20 contenant un groupe motopropulseur, un bloc batterie et une électronique de navigation. Le drone 2 représenté sur les Figures 5 et 6 comprend deux rotors contrarotatifs 21a, 21b, à savoir deux hélices superposées. Il convient de noter que le drone 2 pourrait comprendre un nombre quelconque de rotors. Les pales 22 de chaque rotor 21a, 21b sont pliables et peuvent donc être déplacées d'une position repliée ([Fig.5]) à une position déployée ( [Fig.6]). Le drone 2 est équipé d'une charge utile 23 montée de manière amovible sur le corps de base 20. Cette charge utile 23 peut être une charge létale ou non létale. Par exemple, le drone 2 pourrait être équipé d'une charge létale de type explosive, d'une charge non létale permettant de lâcher de la peinture ou un fumigène, ou encore d'une charge optronique permettant l'observation et la détection.

Si l'on se réfère désormais aux Figures 1 à 4, on peut voir que le dispositif 1 comprend un tube de lancement 3 d'axe longitudinal A1, destiné à recevoir l'objet à lancer, à savoir le drone 2, avant son lancement, et des moyens d'éjection 4 pour éjecter le drone 2.

Le tube de lancement 3 présente une forme générale cylindrique autour de son axe longitudinal A1, et il a une extrémité avant 3a formant l'embouchure pour la sortie du drone 2 et une extrémité arrière 3b dans la région de laquelle sont agencés les moyens d'éjection 4.

On souligne ici que les termes « avant » et « arrière » s'entendent par référence au sens prédéterminé de déplacement du drone 2 par rapport au tube de lancement 3 lors du lancement.

L'extrémité avant 3a est fermée, avant le lancement, par un bouchon étanche 30 de forme circulaire dont le diamètre correspond au diamètre extérieur du tube de lancement 3. Un joint torique 31 est interposé entre le bouchon 30 et la paroi interne du tube de lancement 3, au niveau de l'extrémité avant 3a.

L'extrémité arrière 3b est formée par un culot 32 qui se présente sous la forme d'un bloc de section circulaire, dont le diamètre correspond au diamètre externe du tube de lancement 3. Le culot 32 est fixé à un épaulement intérieur 33 du tube de lancement 3, de forme annulaire, par des organes de fixation 34, tels que des vis, traversant des orifices prévus dans le culot 32 et des orifices prévus dans l'épaulement intérieur 33 et situés en regard les uns des autres.

Le tube de lancement 3 défini à l'intérieur de celui-ci une chambre de lancement 35 cylindrique présentant, dans la région de l'extrémité arrière 3b, un siège 36, ici formé par l'épaulement intérieur 33, contre lequel le drone 2 sera placé avant éjection hors du tube de lancement 3 par les moyens d'éjection 4.

Les moyens d'éjection 4 comprennent une source de pression 5 ou 5', une chambre de pressurisation 6 et des moyens d'obturation temporaire 7.

La source de pression 5 ou 5' est destinée à permettre la mise sous pression de la chambre de pressurisation 6 par du gaz comprimé, qui pourra être de l'air, un gaz inerte, de la vapeur, etc., ou une quelconque combinaison de ceux-ci.

Il convient donc de souligner que, bien que le terme « pneumatique » soit employé pour désigner le dispositif de lancement selon la présente invention, il n'est pas limité à l'utilisation d'air comme gaz de lancement pour le drone 2.

La source de pression peut être toute source de pression de gaz.

Dans le mode de réalisation illustré sur la [Fig.1] et ne faisant pas partie de l'invention revendiquée, pour des raisons d'encombrement, la source de pression 5 est une source de pression externe, c'est-à-dire qu'elle est disposée à l'extérieur du tube de lancement 3 et est apte à être mise en communication avec la chambre de pressurisation 6 par l'intermédiaire d'un raccord pneumatique 50. Ce raccord pneumatique 50 comporte un orifice d'admission qui débouche dans le culot 32.

La chambre de pressurisation 6 est délimitée latéralement par une partie tubulaire 60, d'axe longitudinal A2, s'étendant perpendiculairement à partir de la paroi transversale du culot 32, autrement dit parallèlement audit axe longitudinal A1, en direction de l'extrémité avant 3a du tube de lancement 3. Ainsi, la chambre de pressurisation 6 a ainsi une extrémité arrière 6b fermée par ladite paroi transversale et une extrémité avant 6a ouverte, et se situe à l'intérieur de la région arrière du tube de lancement 3. La partie tubulaire 60 est ici formée d'un seul tenant avec le culot 32, mais en variante la chambre de pressurisation 6 peut être fixée à celui-ci par tout moyen approprié.

Un orifice d'entrée de gaz 61 est prévu dans une région de la paroi latérale de la chambre de pressurisation 6 qui est située dans le culot 32, pour permettre au gaz entrant par un orifice d'admission du culot 32 d'entrer dans la chambre de pressurisation 6.

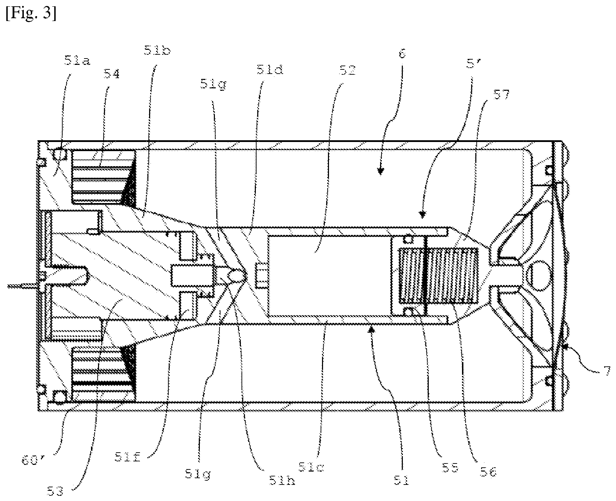

Dans le mode de réalisation des Figures 2 et 3, la source de pression est une source de pression interne 5', c'est-à-dire disposée à l'intérieur du tube de lancement 3, et plus particulièrement, à l'intérieur de la chambre de pressurisation 6 qui est ici formée par une cloche de pressurisation 60'.

La source de pression 5' est un initiateur chimique, ici basé sur la réaction entre du peroxyde d'hydrogène (H₂O₂) et du permanganate de potassium (KMnO₄).

L'initiateur chimique 5' comprend un diffuseur 51 délimitant un réservoir 52 de H₂O ₂, une électrovanne 53, un catalyseur solide 54 à base de KMnO₄, un piston 55, un ressort 56 et un bouchon de réservoir 57.

La cloche de pressurisation 60' se présente sous la forme d'un corps tubulaire destiné à recevoir l'ensemble des composants de l'initiateur chimique 5' et fixé au culot 32 de façon à délimiter une chambre analogue à celle formée par la partie tubulaire 60, à savoir située à l'extrémité arrière 3b du tube de lancement 3. L'axe longitudinal de la cloche 60' est ainsi aussi coaxial avec l'axe longitudinal A1 du tube de lancement 3.

Le diffuseur 51 est formé par une pièce globalement cylindrique dont une extrémité présente une bride 51a annulaire sur laquelle la cloche 60' est montée, avec interposition d'un joint d'étanchéité entre les deux, et qui est rendue solidaire du culot 32, notamment par des vis, là encore avec interposition d'un joint d'étanchéité entre les deux. La pièce globalement cylindrique comprend, en partant de la bride 51a, une partie arrière 51b dans laquelle est ménagée une cavité débouchant dans l'ouverture centrale de la bride 51a et recevant l'électrovanne 53, une partie avant 51c tubulaire dont l'extrémité avant est fermée par le bouchon de réservoir 57, et une partie intermédiaire 51d séparant les parties arrière et avant 51b, 51c.

Le piston 55 est monté à l'intérieur de la partie avant 51c, entre le bouchon 57 et la partie intermédiaire 51d. Le ressort 56 est un ressort hélicoïdal monté entre le piston 55 et le bouchon 57, les extrémités du ressort 56 étant en appui respectivement contre le piston 55 et le bouchon 57. Le bouchon 57 et le piston 55 comportant chacun une cavité, lesdites cavités étant aptes à recevoir le ressort 56 lorsque le bouchon 57 et le piston 55 sont en contact l'un avec l'autre. La région délimitée latéralement par la paroi latérale interne de la partie avant 51c, à l'arrière par la partie intermédiaire 51d et à l'avant par le piston 55 constitue le réservoir 52 de H₂O₂ qui pourra être mis sous pression par l'action du piston 55 et du ressort 56. L'extrémité avant du bouchon 57 est rendue solidaire de l'extrémité avant de la cloche 60', cette dernière étant elle-même rendue solidaire, notamment par vissage, des moyens d'obturation temporaire 7.

Le catalyseur solide 54 à base de KMnO₄ est reçu dans l'espace formé entre la première partie 51b du diffuseur 51 et la paroi latérale interne de la cloche 60'. Ce catalyseur solide 54 se présente donc sous la forme d'un corps annulaire ayant une paroi arrière en contact avec la bride 51a.

Comme on peut mieux le voir sur la [Fig.2], des premiers canaux 51e sont ménagés dans la partie intermédiaire 51d de façon à mettre en communication fluidique le réservoir 52 et un espace libre 51f dans la cavité dans laquelle est reçue l'électrovanne 53. Les premiers canaux 51e sont ici parallèles à l'axe longitudinal du diffuseur 51. Si l'on se réfère maintenant à la [Fig.3], on peut voir que des seconds canaux 51g obliques sont également ménagés dans la partie intermédiaire 51d de façon à mettre en communication fluidique la chambre de pressurisation 6 avec un passage de sortie 51h ménagé au centre de la partie intermédiaire 51d et qui peut être mis en communication fluidique avec ledit espace libre 51f par actionnement de l'électrovanne 53. L'on peut donc commander l'électrovanne 53 de façon à amener le contenu du réservoir 52 à entrer dans la chambre de pressurisation 6 où le catalyseur solide 54 est situé.

La réaction chimique exothermique entre le catalyseur solide 54 à base de KMnO₄ et le H₂O₂ contenu dans le réservoir 52 permet de générer une très grande quantité d'oxygène et de vapeur d'eau, permettant la mise sous pression de la chambre de pressurisation 6, jusqu'à la pression de déclenchement.

L'axe longitudinal A2 de la chambre de pressurisation 6 est coaxial avec l'axe longitudinal A1 de la chambre de lancement 35. Le diamètre extérieur de la chambre de pressurisation 6 est inférieur au diamètre intérieur du tube de lancement 3, de sorte qu'un espace libre est formé entre la paroi externe de la chambre de pressurisation 6 et la paroi interne du tube de lancement 3, permettant d'y recevoir au besoin une partie de l'objet à éjecter.

La chambre de pressurisation 6, qu'elle soit définie par la partie tubulaire 60 ou la cloche de pressurisation 60', comporte, à son extrémité avant 6a ouverte, un rebord interne annulaire 62 qui délimite une ouverture de passage 63 circulaire débouchant dans la chambre de lancement 35.

Les moyens d'obturation temporaire 7 sont disposés à l'ouverture de passage 63 et servent à l'obturer de manière sélective. Plus précisément, les moyens d'obturation temporaire 7 sont aptes à obturer l'ouverture de passage 63, avant le lancement, et à la laisser libre à l'instant du lancement.

En d'autres termes, les moyens d'obturation temporaire 7 sont aptes à passer de manière instantanée d'une configuration fermée à une configuration ouverte. Dans la configuration fermée, l'extrémité avant 6a est fermée, de sorte que la chambre de pressurisation 6 est scellée de manière étanche et qu'aucun échange de gaz n'est possible entre la chambre de pressurisation 6 et la chambre de lancement 35, lesquelles ne sont pas mises en communication. Dans la configuration ouverte, l'ouverture de passage 63 n'est pas obturée, l'extrémité avant 6a est ouverte, la chambre de pressurisation 6 et la chambre de lancement 35 sont en communication et le gaz contenu dans la chambre de pressurisation 6 entre dans la chambre de lancement 35 pour éjecter le drone 2.

Dans les modes de réalisation préférés de la présente invention (Figures 1 à 4), les moyens d'obturation temporaire 7 comprennent un ensemble disque de rupture 70 comprenant une membrane tarée 71.

Le disque de rupture 70 comporte une bague de support 72 fixée à l'extrémité avant 6a de la chambre de pressurisation 6 et portant la membrane tarée 71.

La bague de support 72 a un premier côté, un second côté, un bord périphérique externe et un bord périphérique interne annulaire, ce dernier délimitant une ouverture centrale 72a dont le diamètre, autrement dit le diamètre interne de la bague de support 72, est égal au diamètre de l'ouverture de passage 63. Le diamètre externe de la bague de support 72 est égal au diamètre externe de la partie tubulaire 60, le cas échéant au diamètre externe de la cloche 60'. Le premier côté de la bague de support 72 est appliqué contre le rebord interne 62 et le second côté de la bague de support 72 est donc orienté vers l'extrémité avant 3a du tube de lancement 3. En d'autres termes, la bague de support 72 est interposée entre l'extrémité avant 6a de la chambre de pressurisation 6 et la chambre de lancement 35.

La membrane tarée 71 s'étend en travers de l'ouverture centrale 72a de la bague de support 72. Ainsi, dans la configuration fermée, la membrane tarée 71 obture la totalité de l'ouverture de passage 63.

Concernant le mode de rupture de la membrane 71, différentes variantes peuvent convenir, à condition que la rupture de la membrane 71 dégage la totalité de la section de l'ouverture de passage 63. Par exemple, la membrane 71 pourrait se rompre au niveau de sa périphérie, à savoir sa zone de jonction avec la bague de support 72, ou en son centre.

L'ensemble disque de rupture 70 est fixé à la chambre de pressurisation 6 par une bague de fixation 73. La bague de fixation 73 est une pièce similaire à la bague de support 72 et se présente sous la forme d'une section annulaire plate de mêmes dimensions que la bague de support 72. Un premier côté de la bague de fixation 73 est appliqué contre le second côté de la bague de support 72. Des trous, aptes à recevoir des organes de fixation 74, sont ménagés dans la bague de fixation 73, de façon à venir en regard de trous correspondants prévus dans la bague de support 72 et dans le rebord interne 62. Ainsi, l'ensemble disque de rupture 70 est fixé à l'extrémité ouverte 6a de la chambre de pressurisation 6 par des organes de fixation 74 traversant la bague de fixation 73, la membrane 71, la bague de support 72 et le rebord interne 62, et dont les têtes se trouvent côté chambre de lancement 35. A l'état monté de l'ensemble disque de rupture 70, celui-ci se trouve donc interposé entre le rebord interne 62 et la bague de fixation 73. Un tel montage est aisé et permet de démonter aisément et rapidement l'ensemble disque de rupture 70 et la membrane 71, après rupture, afin de le remplacer par un autre disque de rupture portant une membrane non rompue, ou de remplacer uniquement la membrane.

Si l'on se réfère à nouveau aux Figures 1, 2, 5 et 6, on peut voir que le dispositif 1 comprend en outre un sabot de lancement 8 destiné à recevoir le drone 2.

Le sabot de lancement 8 est dimensionné et configuré pour être reçu dans la chambre de lancement 35 afin de permettre le guidage du drone 2 dans le tube de lancement 3 lors de la phase de lancement, et pour entourer un drone 2 afin de permettre de protéger le drone 2 lors du lancement. Il convient de souligner qu'un sabot 8 différent est défini suivant le profil du drone 2 et de sa charge utile 23.

Dans le mode de réalisation particulier représenté, le sabot 8 est formé de plusieurs segments 80 séparables, en particulier de quatre segments 80. Ces segments 80 délimitent entre eux un espace 81 de réception de drone ayant une ouverture destinée à être située en regard de l'extrémité avant 3a du tube de lancement 3. Ces segments 80 délimitent également entre eux un espace 82 de réception pour la chambre de pressurisation 6, ayant une ouverture destinée à permettre le passage de la chambre de pressurisation 6 lorsque le sabot 8 est introduit dans la chambre de lancement 35.

Les segments 80 peuvent être identiques.

En variante, le sabot 8 pourrait être formé de quatre segments séparables, dont trois segments identiques et un segment contenant un dispositif 9 de recharge et de communication entre le drone 2 et le tube de lancement 3. Le sabot 8 étant destiné à être éjecté hors du tube de lancement 3 et à se désolidariser du drone 2 après le lancement, le dispositif 9 de recharge et de communication est un dispositif sans fil. De préférence, ce dispositif 9 est de type inductif et comporte une bobine d'émission apte à coopérer avec une bobine réceptrice logée dans le drone 2. Ce dispositif 9 comporte en outre des contacts ressorts 90 aptes à coopérer avec une platine de contact prévue dans le tube de lancement 3 pour la connexion entre ce dispositif 9 et le tube de lancement 3.

Le dispositif 1 permet le lancement de drones en maîtrisant la pression de lancement par laquelle le drone 2 est éjecté, et donc une éjection fiable et reproductive pour un déploiement rapide du drone 2.

Cela est possible grâce au fait que :
- d'une part, la membrane 71 est tarée pour s'ouvrir en se rompant lorsque la pression qui lui est appliquée par le gaz présent dans la chambre de pressurisation 6 atteint une valeur prédéterminée, qui sera la pression dite de déclenchement, l'ensemble disque de rupture 70 passant alors instantanément dans sa configuration ouverte, et
- d'autre part, la section transversale de l'ouverture de passage 63 est suffisamment grande pour qu'immédiatement après la rupture de la membrane 71, la pression qui règne dans le volume composé de la chambre de pressurisation 6 et de l'espace libre de la chambre de lancement 35 se trouvant entre la chambre de pressurisation 6 et le drone 2 (à savoir ici l'espace de réception 82 formé par le sabot 8), soit la pression de lancement souhaitée pour le drone 2.

En effet, à l'instant même de la rupture de la membrane tarée 71, le gaz comprimé viendra occuper instantanément tout le volume libre à sa disposition.

Par conséquent, en fonction de caractéristiques du tube de lancement, telles que son diamètre intérieur et sa longueur, et du drone, telles que son poids, la vitesse et la hauteur à laquelle il doit être éjecté avant qu'il ne puisse être déployé de manière sûre, on peut définir à l'avance la pression de lancement, à savoir la pression de gaz qu'il convient de lui appliquer lorsqu'il est en position contre le siège 36 en tenant compte du volume de la chambre de pressurisation 6 et du volume dudit espace libre, et ainsi la pression de déclenchement, à savoir la pression de gaz dans la chambre de pressurisation 6 qui permettra d'obtenir la pression de lancement après rupture de la membrane tarée 71.

Ainsi, lorsqu'on souhaite lancer un drone 2, on introduit tout d'abord le sabot de lancement 8, dans l'espace de réception 81 duquel est reçu le drone 2, par l'extrémité avant 3a ouverte du tube de lancement 3, jusqu'à venir le placer en contact contre le siège 36, puis l'on ferme l'extrémité avant 3a du tube de lancement 3 par le bouchon étanche 30.

Lorsque l'on souhaite lancer le drone 2, la source de pression 5 ou 5' est mise en communication avec la chambre de pressurisation 6 ou actionnée pour mettre la chambre de pressurisation 6 sous pression jusqu'à la pression de déclenchement souhaitée. Dès que la pression de déclenchement est atteinte, la membrane 71 se rompt, ouvrant ainsi l'ouverture de passage 63. Le gaz comprimé se trouvant jusqu'à alors dans la chambre de pressurisation 6 est libéré et vient occuper instantanément l'espace de réception 82 du sabot 8 et appliquer contre sa face un effort de poussée, éjectant le sabot 8 et le drone 2 hors du tube de lancement 3, éjectant par la même occasion le bouchon étanche 30. Une fois éjecté hors du tube de lancement 3, le sabot 8 se désolidarise en segments 80 séparés en raison des frottements de l'air et de la poussée exercée par les pales 22 du drone 2 lors de leur passage en position déployée. Une fois à son apogée, le drone 2 démarre, se stabilise et sa mission peut commencer.

Dans le cas où l'on souhaite mettre en œuvre le lancement d'une pluralité de drones 2, une pluralité de dispositifs 1 de lancement selon la présente invention peuvent être montés sur un même véhicule (non représenté). Dans ce cas, et dans le cas où la source de pression est une source de pression externe, un seul circuit pneumatique est nécessaire pour mettre sous pression les chambres de pressurisation 6. Dans cette variante, chaque tube de lancement 3 peut porter un code couleur en fonction de la charge utile 23 dont le drone 2 est équipé. Cela permet une identification visuelle et rapide de l'objet à éjecter.

Il est bien entendu que les modes de réalisation particuliers qui viennent d'être décrits ont été donnés à titre indicatif et non limitatif, et que des modifications peuvent être apportées sans que l'on s'écarte pour autant du cadre de la présente invention, telle que limitée par les revendications.

## Revendications

1. Dispositif (1) de lancement pneumatique d'un drone (2), dispositif (1) comprenant :
• un tube de lancement (3) longitudinal ayant une première extrémité (3b), arrière, qui est fermée et une seconde extrémité (3a), avant, qui est ouverte, et dont l'intérieur définit une chambre de lancement (35) destinée à recevoir un drone (2) et dans laquelle se situe un siège (36) contre lequel le drone (2) est positionné avant son lancement ;
• une chambre de pressurisation (6) située à l'extrémité arrière (3b) du tube de lancement (3) et apte à être mise sous pression par une source de pression (5'), la chambre de pressurisation (6) ayant une première extrémité (6a), avant, dans laquelle est prévue une ouverture de passage (63) débouchant dans la chambre de lancement (35) et, en utilisation, derrière le drone (2) placé contre le siège (36) ; et
• des moyens d'obturation temporaire (7) de l'ouverture de passage (63) aptes à passer de manière instantanée d'une configuration fermée, dans laquelle l'ouverture de passage (63) est obturée de manière étanche, à une configuration ouverte dans laquelle l'ouverture de passage (63) est complètement ouverte,
les moyens d'obturation temporaire (7) étant agencés pour passer de la configuration fermée à la configuration ouverte de manière instantanée sous l'action de la pression de gaz à l'intérieur de la chambre de pressurisation (6), après que celle-ci a atteint une pression prédéterminée, dite de déclenchement, et par le fait que la section transversale de l'ouverture de passage (63) est suffisamment grande pour qu'instantanément au passage des moyens d'obturation temporaire (7) de la configuration fermée à la configuration ouverte, la pression de gaz régnant dans la chambre de pressurisation (6) et l'espace se trouvant derrière le drone (2), alors en communication l'un avec l'autre, soit la pression de lancement souhaitée pour le drone (2),
**caractérisé par le fait qu'**il comprend ladite source de pression (5'), laquelle est formée par une source de gaz interne disposée à l'intérieur de la chambre de pressurisation (6), ladite source de pression (5') comprenant, placés dans la chambre de pressurisation (6), un diffuseur (51), délimitant un réservoir (52) d'un premier réactif, et un second réactif (54), les premier et second réactifs, lorsque mis en présence l'un de l'autre, réagissant en générant un gaz de mise sous pression de la chambre de pressurisation (6), une électrovanne (53) étant disposée de façon à permettre de manière sélective la mise en communication fluidique du réservoir (52) et de la chambre de pressurisation (6).

2. Dispositif (1) selon la revendication 1, **caractérisé par le fait que** la section transversale de l'ouverture de passage (63) représente entre 30 % et 50 % de la section transversale de la chambre de lancement (35).

3. Dispositif (1) selon l'une quelconque des revendications 1 et 2, **caractérisé par le fait que** les moyens d'obturation temporaire (7) sont agencés pour passer de la configuration fermée à la configuration ouverte de manière automatique dès que la pression de gaz à l'intérieur de la chambre de pressurisation (6) atteint la pression de déclenchement.

4. Dispositif (1) selon la revendication 3, **caractérisé par** le fait les moyens d'obturation temporaire (7) comprenant un ensemble disque de rupture (70) qui est disposé à l'ouverture de passage (63) et comprend une membrane tarée (71) s'étendant en travers de l'ouverture de passage (63) de façon à l'obturer, la membrane (71) étant dimensionnée pour se rompre à la pression de déclenchement.

5. Dispositif (1) selon la revendication 4, **caractérisé par le fait que** l'ensemble disque de rupture (70) est fixé de manière amovible à la chambre de pressurisation (6).

6. Dispositif (1) selon la revendication 5, **caractérisé par le fait que** l'ensemble disque de rupture (70) comprend une bague de support (72) et une bague de fixation (73) de mêmes dimensions et fixées l'une à l'autre par des organes de fixation (74) traversant des trous prévus à cet effet dans les bagues (72, 73), avec la périphérie de la membrane tarée (71) prise en sandwich entre les bagues (72, 73), l'ensemble disque de rupture étant fixée de manière amovible à l'extrémité avant (6a) de la chambre de pressurisation (6) également par lesdits organes de fixation (74).

7. Dispositif (1) selon l'une quelconque des revendications 1 à 6, **caractérisé par le fait que** l'extrémité arrière (3b) du tube de lancement (3) est formée par un culot (32) fixé de manière amovible à un épaulement intérieur (33) du tube de lancement (3), culot (32) à partir duquel s'étend une partie tubulaire (60, 60') dont l'axe longitudinal (A2) est coaxial à l'axe longitudinal (A1) du tube de lancement (1) et qui définit, avec le culot (32), la chambre de pressurisation (6), un joint d'étanchéité (31) étant interposé entre la partie tubulaire (60, 60') et le bord annulaire intérieur de l'épaulement intérieur (33).

8. Dispositif (1) selon l'une quelconque des revendications 1 à 7, **caractérisé par le fait que** le premier réactif est du peroxyde d'hydrogène (H₂O₂) sous pression et le second réactif (54) est un catalyseur solide à base de permanganate de potassium (KmnO₄).

9. Dispositif (1) selon l'une quelconque des revendications 1 à 8, **caractérisé par le fait qu'**il comprend en outre un sabot de lancement (8) apte à être reçu dans la chambre de lancement (35) et mis en contact contre le siège (36), le sabot de lancement (8) étant configuré pour contenir et entourer le drone (2) avant le lancement et pendant son déplacement le long du tube de lancement (3) lors de l'éjection.

10. Dispositif (1) selon la revendication 9, **caractérisé par le fait que** le sabot de lancement (8) est formé de plusieurs segments (80) séparables, de préférence quatre segments.

## Patentansprüche

1. - Vorrichtung (1) zum pneumatischen Abschuss einer Drohne (2), die Vorrichtung (1) umfassend:
- ein längsgerichtetes Abschussrohr (3), das ein erstes hinteres Ende (3b), das geschlossen ist, und ein zweites vordere Ende (3a), das offen ist, aufweist, und deren Inneres eine Abschusskammer (35) definiert, die dazu bestimmt ist, eine Drohne (2) aufzunehmen, und in der sich ein Sitz (36) befindet, an dem die Drohne (2) vor ihrem Abschuss positioniert ist;
- eine Druckkammer (6), die sich an dem hinteren Ende (3b) des Abschussrohrs (3) befindet und geeignet ist, um von einer Druckquelle (5') mit Druck beaufschlagt zu werden, wobei die Druckkammer (6) ein erstes vorderes Ende (6a) aufweist, in dem eine Durchgangsöffnung (63) bereitgestellt ist, die in die Abschusskammer (35) und im Gebrauch hinter der Drohne (2), die an dem Sitz (36) platziert ist, öffnet; und
- temporäre Verschlusseinrichtungen (7) der Durchgangsöffnung (63), die geeignet sind, um sofort aus einer geschlossenen Konfiguration, in der die Durchgangsöffnung (63) dicht verschlossen ist, in eine offene Konfiguration, in der die Durchgangsöffnung (63) vollständig geöffnet ist, überzugehen,
wobei die temporären Verschlussmittel (7) angeordnet sind, um unter der Wirkung des Gasdrucks im Inneren der Druckkammer (6) sofort von der geschlossenen in die offene Konfiguration überzugehen, nachdem der Gasdruck einen vorbestimmten Druck, den sogenannten Auslösedruck, erreicht hat, und dadurch, dass der Querschnitt der Durchgangsöffnung (63) ausreichend groß ist, damit sofort beim Übergang der temporären Verschlusseinrichtungen (7) von der geschlossenen Konfiguration in die offene Konfiguration der Gasdruck, der in der Druckkammer (6) und dem Raum hinter der Drohne (2), die dann miteinander in Verbindung stehen, herrscht, der gewünschte Abschussdruck für die Drohne (2) ist,
**dadurch gekennzeichnet, dass** sie die Druckquelle (5') umfasst, die durch eine interne Gasquelle gebildet ist, die im Inneren der Druckkammer (6) angeordnet ist, die Druckquelle (5') umfassend, die in der Druckkammer (6) sind, einen Diffusor (51), der einen Speicher (52) eines ersten Reaktant begrenzt, und einen zweiten Reaktant (54), wobei der erste und der zweite Reaktant, wenn sie miteinander in Kontakt gebracht werden, unter Erzeugung eines Gases zur Druckbeaufschlagung der Druckkammer (6) reagieren, wobei ein Magnetventil (53) angeordnet ist, um selektiv die Fluidverbindung zwischen dem Speicher (52) und der Druckkammer (6) zu ermöglichen.

2. - Vorrichtung (1) nach Anspruch 1, **dadurch gekennzeichnet, dass** der Querschnitt der Durchgangsöffnung (63) zwischen 30 % und 50 % des Querschnitts der Abschusskammer (35) darstellt.

3. - Vorrichtung (1) nach einem der Ansprüche 1 oder 2, **dadurch gekennzeichnet, dass** die temporären Verschlusseinrichtungen (7) angeordnet sind, um automatisch von der geschlossenen Konfiguration in die offene Konfiguration überzugehen, sobald der Gasdruck innerhalb der Druckkammer (6) den Auslösedruck erreicht.

4. - Vorrichtung (1) nach Anspruch 3, **dadurch gekennzeichnet, dass** die temporären Verschlusseinrichtungen (7) eine Berstscheibenanordnung (70) umfassen, die an der Durchgangsöffnung (63) angeordnet ist und eine tarierte Membran (71) umfasst, die sich über die Durchgangsöffnung (63) erstreckt, um sie zu verschließen, wobei die Membran (71) ausgelegt ist, um bei dem Auslösedruck zu reißen.

5. - Vorrichtung (1) nach Anspruch 4, **dadurch gekennzeichnet, dass** die Berstscheibenanordnung (70) lösbar an der Druckkammer (6) befestigt ist.

6. - Vorrichtung (1) nach Anspruch 5, **dadurch gekennzeichnet, dass** die Berstscheibenanordnung (70) einen Haltering (72) und einen Befestigungsring (73) mit denselben Abmessungen umfasst, die durch Befestigungselemente (74) aneinander befestigt sind, die Löcher durchqueren, die zu diesem Zweck in den Ringen (72, 73) bereitgestellt sind, wobei der Umfang der tarierten Membran (71) sandwichartig zwischen den Ringen (72, 73) eingespannt ist, wobei die Berstscheibenanordnung auch durch die Befestigungselemente (74) lösbar an dem vorderen Ende (6a) der Druckkammer (6) befestigt ist.

7. - Vorrichtung (1) nach einem der Ansprüche 1 bis 6, **dadurch gekennzeichnet, dass** das hintere Ende (3b) des Abschussrohrs (3) von einem Sockel (32) gebildet ist, der abnehmbar an einer inneren Schulter (33) des Abschussrohrs (3) befestigt ist, wobei sich von dem Sockel (32) ein rohrförmiger Abschnitt (60, 60') erstreckt, dessen Längsachse (A2) koaxial zu der Längsachse (A1) des Abschussrohrs (1) ist und der mit dem Sockel (32) die Druckkammer (6) definiert, wobei eine Dichtung (31) zwischen den rohrförmigen Abschnitt (60, 60') und den inneren ringförmigen Rand der inneren Schulter (33) eingefügt ist.

8. - Vorrichtung (1) nach einem der Ansprüche 1 bis 7, **dadurch gekennzeichnet, dass** der erste Reaktant unter Druck stehendes Wasserstoffperoxid (H₂O₂) ist und der zweite Reaktant (54) ein Feststoffkatalysator auf Basis von Kaliumpermanganat (KMnO₄) ist.

9. - Vorrichtung (1) nach einem der Ansprüche 1 bis 8, **dadurch gekennzeichnet, dass** sie ferner einen Abschussschuh (8) umfasst, der geeignet ist, um in der Abschusskammer (35) aufgenommen und mit dem Sitz (36) in Kontakt gebracht zu werden, wobei der Abschussschuh (8) konfiguriert ist, um die Drohne (2) vor dem Abschuss und während ihrer Bewegung entlang des Abschussrohrs (3) beim Ausstoßen zu enthalten und zu umgeben.

10. - Vorrichtung (1) nach Anspruch 9, **dadurch gekennzeichnet, dass** der Abschussschuh (8) aus mehreren trennbaren Segmenten (80), vorzugsweise vier Segmenten, gebildet ist.

## Claims

1. - A device (1) for pneumatic launching of a drone (2), the device (1) comprising:
- a longitudinal launch tube (3) having a first, rear end (3b), which is closed, and a second, front end (3a), which is open, and the interior of which defines a launch chamber (35) intended to receive a drone (2) and in which there is a seat (36) against which the drone (2) is positioned before its launch;
- a pressurization chamber (6) located at the rear end (3b) of the launch tube (3) and capable of being pressurized by a pressure source (5'), the pressurization chamber (6) having a first, front end (6a) in which is provided a passage opening (63) leading into the launch chamber (35) and, in use, behind the drone (2) placed against the seat (36); and
- means (7) for temporarily closing the passage opening (63), capable of switching instantaneously from a closed configuration, in which the passage opening (63) is closed in a sealed manner, to an open configuration in which the passage opening (63) is fully open,
the temporary closing means (7) being arranged to switch from the closed configuration to the open configuration instantaneously under the action of the gas pressure inside the pressurization chamber (6), after the latter has reached a predetermined pressure, referred to as the trigger pressure, and the cross section of the passage opening (63) being sufficiently large that, instantaneously with the switching of the temporary closing means (7) from the closed configuration to the open configuration, the gas pressure prevailing in the pressurization chamber (6) and the space located behind the drone (2), then in communication with each other, is the desired launching pressure for the drone (2),
**characterized in that** it comprises said pressure source (5'), which is formed by an internal gas source arranged inside the pressurization chamber (6), said pressure source (5') comprising, placed in the pressurization chamber (6), a diffuser (51), delimiting a reservoir (52) with a first reactant, and a second reactant (54), the first and second reactants, when brought into contact with each other, reacting to generate a gas for pressurizing the pressurization chamber (6), a solenoid valve (53) being arranged so as to allow selectively a fluid communication between the reservoir (52) and the pressurization chamber (6).

2. - The device (1) according to claim 1, **characterized in that** the cross section of the passage opening (63) is between 30% and 50% of the cross section of the launch chamber (35).

3. - The device (1) according to any one of claims 1 and 2, **characterized in that** the temporary closing means (7) are arranged to switch from the closed configuration to the open configuration automatically upon the gas pressure inside the pressurization chamber (6) reaching the trigger pressure.

4. - The device (1) according to claim 3, **characterized in that** the temporary closing means (7) comprises a rupture disc assembly (70) that is disposed at the passage opening (63) and comprises a calibrated diaphragm (71) extending across the passage opening (63) so as to close it, the diaphragm (71) being dimensioned to break at the trigger pressure.

5. - The device (1) according to claim 4, **characterized in that** the rupture disc assembly (70) is removably fixed to the pressurization chamber (6).

6. - The device (1) according to claim 5, **characterized in that** the rupture disc assembly (70) comprises a support ring (72) and a fixing ring (73) of the same dimensions and fixed to each other by fixing members (74) passing through holes provided for this purpose in the rings (72, 73), with the periphery of the calibrated diaphragm (71) sandwiched between the rings (72, 73), the rupture disc assembly being removably fixed to the front end (6a) of the pressurization chamber (6) also by said fixing members (74).

7. - The device (1) according to any one of claims 1 to 6, **characterized in that** the rear end (3b) of the launch tube (3) is formed by a base (32) removably fixed to an inner shoulder (33) of the launch tube (3), from which base (32) extends a tubular part (60, 60'), the longitudinal axis (A2) of which is coaxial with the longitudinal axis (A1) of the launch tube (1) and which defines, together with the base (32), the pressurization chamber (6), a gasket (31) being interposed between the tubular part (60, 60') and the inner annular edge of the inner shoulder (33).

8. - The device (1) according to any one of claims 1 to 7, **characterized in that** the first reactant is hydrogen peroxide (H₂O₂) under pressure and the second reactant (54) is a potassium permanganate (KMnO₄)-based solid catalyst.

9. - The device (1) according to any one of claims 1 to 8, **characterized in that** it further comprises a launch sabot (8) capable of being received in the launch chamber (35) and brought into contact against the seat (36), the launch sabot (8) being configured to contain and surround the drone (2) before launch and during its movement along the launch tube (3) during ejection.

10. - The device (1) according to claim 9, **characterized in that** the launch sabot (8) is formed of several separable segments (80), preferably four segments.
